## Europäisches Patentamt
## European Patent Office
## Office européen des brevets

(19)

(11) Veröffentlichungsnummer: **0 005 269**
**B1**

(12) # EUROPÄISCHE PATENTSCHRIFT

(45) Veröffentlichungstag der Patentschrift:
**25.11.81**

(51) Int. Cl.³: **C 08 L 23/06**, C 08 K 5/53

(21) Anmeldenummer: **79101343.6**

(22) Anmeldetag: **03.05.79**

(54) Verwendung einer speziellen Polyolefin-Formmasse zum Herstellen von Folien nach dem Folienblasverfahren.

(30) Priorität: **05.05.78 DE 2819596**

(43) Veröffentlichungstag der Anmeldung:
**14.11.79 Patentblatt 79/23**

(45) Bekanntmachung des Hinweises auf die Patenterteilung:
**25.11.81 Patentblatt 81/47**

(84) Benannte Vertragsstaaten:
**AT BE DE FR GB IT NL**

(56) Entgegenhaltungen:
**DE-A-2 700 235**
**DE-C-1 021 571**

(73) Patentinhaber: **BASF Aktiengesellschaft,**
**Carl-Bosch-Strasse 38, D-6700 Ludwigshafen (DE)**

(72) Erfinder: **Glaser, Rudolf, Dr., Don-Carlos-Strasse 9,**
**D-6700 Ludwigshafen (DE)**
Erfinder: **Weiss, Frank, Dr., Gontardstrasse 4,**
**D-6800 Mannheim 1 (DE)**
Erfinder: **Cramer, Dieter, Werrystrasse 30,**
**D-6715 Lambsheim (DE)**

EP 0 005 269 B1

BUNDESDRUCKEREI BERLIN

## Verwendung einer speziellen Polyolefin-Formmasse zum Herstellen von Folien nach dem Folienblasverfahren

Die vorliegende Erfindung betrifft die Verwendung einer speziellen Polyolefin-Formmasse zum Herstellen von 10 bis 500, insbesondere 10 bis 120 und vor allem 10 bis 30 μm dicken biaxial verstreckten Folien nach dem Folienblasverfahren mit einem Aufblasverhältnis bis zu 1 : 10 und insbesondere von 1 : 2 bis 1 : 7.

Das Herstellen solcher — qualitativ zufriedenstellender — Folien, auch dünner und sehr dünner Folien (wie sie z. B. als Einwickelfolien oder Folien für Beutel gängig sind), nach dem Folienblasverfahren gelingt im allgemeinen ohne besondere Schwierigkeiten mit entsprechenden Polyolefin-Formmassen, denen ein nach Ziegler — also mittels eines Titan enthaltenden Katalysators — hergestelltes Polyäthylen zugrunde liegt, während sich bei Formmassen, die auf einem nach Phillips — also mittels eines Chrom enthaltenden Katalysators — hergestellten Polyäthylen basieren, mit abnehmender Dicke der Folien zunehmende Schwierigkeiten bei der Herstellung ergeben. Diese Schwierigkeiten haben es bislang nicht gestattet, wünschenswert dünne und qualitativ zufriedenstellende Folien (wie sog. »Papier«- oder »Raschel«-Folien) nach dem Folienblasverfahren aus Formmassen herzustellen, deren Polyolefin ein Phillips-Polyäthylen ist.

Die Möglichkeit des Einsatzes auch solcher Polyäthylene auf dem in Rede stehenden Gebiet wäre indes erwünscht, da Ziegler-Polyäthylene anderweit problematischer sind, z. B. bei der nötigen Stabilisierung gegen Schädigung durch UV-Licht oder Sauerstoff.

Aufgabenstellung zur vorliegenden Erfindung war es dementsprechend, eine auf Phillips-Polyäthylen basierende Formmasse aufzuzeigen, die sich zum Herstellen qualitativ zufriedenstellender Folien, auch dünner und sehr dünner Folien, nach dem Folienblasverfahren eignet.

Wie sich ergeben hat, ist die Lösung dieser Aufgabe möglich mit Formmassen aus einer speziell ausgewählten Art von Phillips-Polyäthylen und einer speziell ausgewählten Gruppe von Trisphosphiten als Additiv.

Gegenstand der vorliegenden Erfindung ist dementsprechend die Verwendung einer Formmasse aus

(1) 100 Gewichtsteilen eines Polyäthylens, das
    (1.1) mittels eines Chrom enthaltenden Katalysators hergestellt ist,
    (1.2) eine Dichte von 0,935 bis 0,945, insbesondere von 0,939 bis 0,945 g/cm³ hat,
    (1.3) einen Schmelzindex (nach DIN 53 735 bei 190°C/2,16 kg) von kleiner 1,0 g/10 min aufweist und
    (1.4) eine Lösungsviskosität (nach DIN 53 728/Blatt 4) von 1 bis 5 cm³/g besitzt,
(2) 0,05 bis 1, insbesondere 0,1 bis 0,5 Gewichtsteilen eines Tris-(2,4-dialkylphenyl)-phosphits, wobei die Alkylgruppen gleich oder verschieden sind und jeweils 1 bis 9 Kohlenstoffatome enthalten, sowie
(3) — gegebenenfalls — einschlägig üblichen anderen Additiven in einschlägig üblichen Mengen,

zum Herstellen von 10 bis 500, insbesondere 10 bis 120 und vor allem 10 bis 30 μm dicken biaxial verstreckten Folien nach dem Folienblasverfahren mit einem Aufblasverhältnis bis zu 1 : 10 und insbesondere von 1 : 2 bis 1 : 7.

Zur stofflichen Seite des Erfindungsgegenstandes ist im einzelnen das folgende zu sagen:

(1) Die einzusetzenden Polyäthylene sind an sich bekannt und im Handel erhältlich, so daß sich nähere Ausführungen zu ihnen erübrigen. Zu bemerken ist jedoch, daß sich zweierlei gezeigt hat:
    (a) Besonders gut geeignet sind Polyäthylene, die Schmelzindices (nach DIN 53 735 bis 190°C/2,16 kg) von 0,1 bis 0,6 g/10 min aufweisen und Lösungsviskositäten (nach DIN 53 728/Blatt 4) von 1,8 bis 2,6 cm³/g besitzen. Solche Polyäthylene lassen sich z. B. bevorzugt zum Herstellen von Folien für Einwickelzwecke verwenden.
    (b) Besonders gut geeignet sich auch Polyäthylene, die Schmelzindices (nach DIN 53 735 bei 190°C/21,6 kg) von 2 bis 18 g/10 min aufweisen — also Schmelzindices, die bei 2,16 kg Belastung in jedem Fall unter 0,1 g/10 min liegen, aber aus Gründen der meßtechnischen Zweckmäßigkeit mit 21,6 kg Belastung bestimmt und angegeben werden — und Lösungsviskositäten (nach DIN 53 728/Blatt 4) von 2,7 bis 4,0 cm³/g besitzen. Solche Polyäthylene lassen sich z. B. bevorzugt verwenden zum Herstellen von Folien für Tüten, Tragebeutel, Säcke und Web- oder Klebebänder sowie zum Kaschieren; die Folien haben eine hohe Festigkeit und Schockzähigkeit; sie eignen sich auch als Schrumpffolien.

(2) Als Tris-(2,4-dialkylphenyl)-phosphite kommen vornehmlich solche in Betracht, deren Alkylgruppen verzweigt sind; die Alkylgruppen sind vorzugsweise verzweigte, 3 bis 5 Kohlenstoffatome enthaltende. Besonders gut geeignet ist das Tris-(2,4-di-tert.-butylphenyl)-phosphit.

(3) Im Rahmen des Erfindungsgegenstandes können — gewünschtenfalls — übliche andere Additive, also Hilfs- und Zusatzstoffe, in einschlägig üblichen Mengen mitverwendet werden. Zu nennen sind beispielsweise Verarbeitungshilfsmittel wie Metallstearate, etwa Calcium-, Zink- oder Kaliumstearat (in Mengen von 0,02 bis 0,5 Gewichtsteilen pro 100 Gewichtsteile Polyäthylen); Antioxidantien, wie phenolische Stoffe, etwa Pentaerythrityltetrakis [3-(3,5-di-tert.-butyl-4-hydroxyphenyl)-propionat] oder Octadecyl-3-(3,5-di-tert.-butyl-4-hydroxyphenyl)-propionat (in Mengen von 0,01 bis 0,2 Gewichtsteilen pro 100 Gewichtsteile Polyäthylen); Antiblockmittel, wie Siliciumdioxid (in Mengen von 0,05 bis 0,5 Gewichtsteilen pro 100 Gewichtsteilen Polyäthylen); ferner Antistatika, Pigmente, Füllstoffe und Nucleierungsmittel.

Das Herstellen der erfindungsgemäß zu verwendenden Formmassen aus ihren Komponenten kann in einschlägig üblichen Mischvorrichtungen in einschlägig üblicher Weise erfolgen; es ist an sich mit keinen Besonderheiten verbunden und bedarf daher keiner näheren Erläuterung.

Sinngemäß das gleiche gilt für das Herstellen der Folien aus den erfindungsgemäß zu verwendenden Formmassen, denn das Folienblasverfahren als solches ist in der Praxis wohl eingeführt und in der Literatur vielfach beschrieben, z. B. in den Aufsätzen von G. Prall in »Modern Plastics«, Band 47 (1970), Heft 5, Seiten 90 bis 92 oder von S. Heimlich in »Industrieanzeiger«, Band 94 (1972), Nr. 97, Seiten 2332 bis 2336 oder in dem Buch »Extrudieren von Schlauchfolien«, VDI-Verlag GmbH, 1973, insbesondere Seiten 193 bis 230.

Beispiel

Es wird verwendet eine Formmasse aus

(1) 100 Gewichtsteilen eines Polyäthylens, das
    (1.1) mittels eines Chrom enthaltenden Katalysators hergestellt ist,
    (1.2) eine Dichte von 0,942 g/cm³ hat,
    (1.3) einen Schmelzindex (nach DIN 53 735 bis 190° C/21,6 kg) von 5,5 g/10 min aufweist und
    (1.4) eine Lösungsviskosität (nach DIN 53 728/Blatt 4) von 3,7 cm³/g besitzt,
(2) 0,2 Gewichtsteilen Tris-(2,4-di-tert.-butyl-phenyl)-phosphit sowie
(3) 0,40 Gewichtsteilen Calciumstearat.

Aus dieser Formmasse wird mittels einer üblichen Folienblasvorrichtung (Durchmesser der Ringdüse: 100 mm; Düsenspalt: 0,8 mm) bei einer Massetemperatur von etwa 250° C ein Schlauch extrudiert und im Verhältnis 1 : 5 aufgeblasen. Die Abzugsgeschwindigkeit wird so gewählt, daß eine 20 μm dicke — biaxial verstreckte — Folie resultiert; sie eignet sich gut zum Herstellen von Beuteln und Tragetaschen.

**Patentanspruch**

Verwendung einer Formmasse aus

(1) 100 Gewichtsteilen eines Polyäthylens, das
    (1.1) mittels eines Chrom enthaltenden Katalysators hergestellt ist,
    (1.2) eine Dichte von 0,935 bis 0,945 g/cm³ hat,
    (1.3) einen Schmelzindex (nach DIN 53 735 bei 190° C/2,16 kg) von kleiner 1,0 g/10 min aufweist und
    (1.4) eine Lösungsviskosität (nach DIN 53 728/Blatt 4) von 1 bis 5 cm³/g besitzt,
(2) 0,05 bis 1 Gewichtsteilen eines Tris-(2,4-dialkylphenyl)-phosphits, wobei die Alkylgruppen gleich oder verschieden sind und jeweils 1 bis 9 Kohlenstoffatome enthalten, sowie
(3) — gegebenenfalls — einschlägig üblichen anderen Additiven in einschlägig üblichen Mengen,

zum Herstellen von 10 bis 500 μm dicken biaxial verstreckten Folien nach dem Folienblasverfahren mit einem Aufblasverhältnis bis zu 1 : 10.

**Claim**

Use of a moulding material consisting of

(1) 100 parts by weight of a polyethylene which
    (1.1) has been prepared using a chromium-containing catalyst,
    (1.2) has a density of from 0.935 to 0.945 g/cm³,
    (1.3) has a melt index (according to DIN 53,735, at 190° C/2.16 kg) of less than 1.0 g/10 min and
    (1.4) has a solution viscosity (according to DIN 53,728/sheet 4) of from 1 to 5 dl/g,
(2) from 0.05 to 1 part by weight of a tris-(2,4-dialkylphenyl)phosphite, wherein the alkyl groups are identical or different and each contains 1 to 9 carbon atoms, and
(3) — if desired — other relevant conventional additives, in relevant conventional amounts,

for the production of 10—500 μm thick, biaxially stretched films by the film-blowing process, using a blow-up ratio ranging to 1 : 10.

**Revendication**

Utilisation d'une matière à mouler consistant en:

(1) 100 parties en poids d'un polyéthylène qui
    (1.1) a été préparé à l'aide d'un catalyseur contenant du chrome,
    (1.2) présente une densité de 0,935 à 0,945 g/cm³,

(1.3) présente un indice de fusion (selon DIN 53.735 à 190° C/2,16 kg) inférieur à 1,0 g/10 mn et

(1.4) présente une viscosité en solution (selon DIN 53.728/feuille 4) de 1 à 5 cm³/g,

(2) 0,05 à 1 partie en poids d'un phosphite de tris-(2,4-dialkylphényle) dans lequel les groupes alkyle, identiques ou différents, contiennent chacun 1 à 9 atomes de carbone, et

(3) — le cas échéant — d'autres additifs usuels appropriés aux quantités usuelles appropriées, pour la préparation de feuilles de 10 à 500 microns d'épaisseur, étirées selon les deux axes, par la technique de soufflage en feuille à un rapport de soufflage allant jusqu'à 1 : 10.